# DEMANDE DE BREVET EUROPEEN

(11) **EP 1 354 926 A2**
(43) Date de publication de la demande: **22.10.2003**
(21) Numéro de dépôt: 03356063.2
(22) Date de dépôt: 15.04.2003
(51) Int. Cl.: C09J 7/02, A61F 13/15

(54) **Complexe perméable au gaz et imperméable au moins pour partie, aux liquides aqueux**

(30) Priorité: 16.04.2002 FR 0204745
(71) Demandeur: RKW Guial, 69650 Quincieux (FR)
(72) Inventeur: Bezier, Bernard, 69003 Lyon (FR)
(74) Mandataire: Le Cacheux, Samuel L.R.

(57) **Abrégé**

L'invention a pour objet un complexe à la fois perméable au gaz et imperméable, au moins pour partie, aux liquides aqueux comprenant un film microporeux à base d'un polymère imperméable aux liquides aqueux, ledit film comportant sur l'une de ses faces, un adhésif thermoplastique incluant des particules d'acide polyacrylique réticulé, au moins partiellement neutralisé sous forme de sels de métal alcalin, de préférence sous forme de sel de sodium, de diamètre moyen compris entre 1 et 65 µm.

L'invention concerne également un produit composite comportant un complexe ci-dessus défini associé sur sa face portant l'adhésif thermoplastique à un matelas absorbant fibreux, un tissu ou un non-tissé, éventuellement recouvert d'un voile de protection, ou bien à un film plastique, par exemple en polyéthylène, perforé.

## Description

La présente invention concerne le domaine technique des matériaux plans composites. Plus particulièrement, la présente invention a pour objet un complexe, à la fois perméable au gaz et imperméable, au moins pour partie, aux liquides aqueux, ainsi que l'utilisation d'un tel complexe pour la fabrication d'articles d'hygiène absorbants jetables, de produits chirurgicaux ou pansements et des articles associant un complexe selon l'invention avec un matelas absorbant, un tissu, un non tissé ou un film plastique, par exemple en polyéthylène, perforé.

Dans le domaine des articles d'hygiène tels que les couches-culottes, les serviettes hygiéniques ou protections féminines ou encore les protège-seins, la nappe ayant pour fonction d'absorber les liquides est généralement placée sur un film imperméable aux liquides qui sert à la fois de support à ladite nappe et également, de barrière au passage des liquides. Lorsque l'article hygiénique est laissé en place sur l'utilisateur alors que la nappe absorbante est imbibée de liquide aqueux, par exemple d'urine, de sang ou de lait, il se produit fréquemment des rougeurs, voire même des allergies dues à l'éventuelle macération de ce liquide aqueux restant en contact prolongé avec la peau de l'utilisateur.

Pour remédier à ce problème, il a déjà été proposé d'utiliser comme support pour la nappe absorbante, un film qui présente la propriété supplémentaire d'être perméable à l'air et à la vapeur d'eau. Cette perméabilité permet au film d'assurer un échange gazeux entre l'intérieur de l'article hygiénique et l'extérieur, de façon à permettre une aération et une évacuation progressive, sous forme de vapeur, du liquide aqueux contenu dans la nappe absorbante.

A cet effet, la technique antérieure propose d'utiliser un film constitué d'un matériau imperméable aux liquides aqueux mais présentant une structure microporeuse le rendant perméable à l'air et à la vapeur d'eau.

La demande de brevet publiée sous le numéro WO 00/05295 décrit un film microporeux, au moins monocouche, ayant une perméabilité au gaz et une imperméabilité aux liquides aqueux, formé par l'étirage au moins uniaxiale d'au moins une nappe préparée à partir d'un mélange d'au moins un polymère polyoléfinique et d'au moins une charge minérale et/ou organique.

Néanmoins, il apparaît qu'à l'usage, un tel film microporeux n'est pas complètement imperméable aux liquides aqueux. En effet, lorsque la nappe absorbante reste imprégnée de liquide aqueux, au bout d'un certain temps, la surface externe du film microporeux devient humide ou même des gouttes de liquide commencent à perler. Il apparaît dont que les solutions de l'art antérieur ne donnent pas entière satisfaction pour les applications envisagées.

Dans ce contexte, la présente invention vise à résoudre le problème ci-dessus mentionné en proposant un complexe à la fois perméable au gaz et imperméable, au moins pour partie, aux liquides aqueux, comprenant un film microporeux à base de polymère imperméable aux liquides aqueux, ledit film comportant sur l'une de ses faces, un adhésif thermoplastique incluant des particules d'acide polyacrylique réticulé, au moins partiellement neutralisé sous forme de sel de métal alcalin, de préférence sous forme de sel de sodium, de diamètre moyen compris entre 1 et 65 µm.

Le complexe, selon l'invention, se présente sous la forme d'un film à la fois souple et flexible, présentant d'une part une microporosité lui donnant la capacité de respirer, c'est-à-dire d'autoriser le passage de gaz ou de vapeur d'eau, tout en étant imperméable aux liquides aqueux, du fait de la présence d'un adhésif thermoplastique contenant un « super absorbant » particulier, à savoir, des particules d'acide polyacrylique réticulé, au moins partiellement neutralisé sous forme de sel de métal alcalin, de diamètre moyen compris entre 1 et 65 µm. Avantageusement, au moins 10 % des fonctions acides sont neutralisées sous forme de sel de métal alcalin. Comme sel de métal alcalin, on pourra citer les sels de calcium ou de préférence les sels de sodium.

En effet, le demandeur a mis en évidence qu'en associant un film microporeux à un adhésif thermoplastique contenant un tel « super absorbant », il est possible d'éviter toute fuite de liquide au travers dudit film, tout en conservant la perméabilité au gaz et à la vapeur d'eau.

Le complexe selon l'invention présente, par ailleurs, des propriétés mécaniques compatibles avec son exploitation ultérieure en tant que support pour nappe absorbante.

La présente invention a également pour objet, l'utilisation d'un complexe ci-dessus défini pour la fabrication d'articles d'hygiène absorbants jetables, tels que les couches-culottes, les serviettes hygiéniques, les protège-seins ainsi que son utilisation pour la fabrication de produits chirurgicaux ou pansements.

Selon un autre de ses aspects, la présente invention a également pour objet des articles d'hygiène jetables comportant un complexe ci-dessus défini associé sur sa face portant l'adhésif thermoplastique à un matelas absorbant, un tissu à base de fibres cellulosiques ou un non tissé à base de fibres de carbone.

L'objet de l'invention sera mieux compris à l'aide de l'exposé détaillé qui va suivre.

Au sens de l'invention, tout type de film polymère microporeux pourra être utilisé. De façon avantageuse, des films microporeux souples et flexibles tels que décrits dans la demande WO 00/05295 seront mis en oeuvre. De tels films comportent, avantageusement mais non nécessairement, une couche unique à base d'une matrice polyoléfinique comportant un ou plusieurs polymères et/ou copolymères oléfiniques notamment choisis dans le groupe constitué par les polyoléfines plastomères telles que les copolymères éthylène-alphaoléfine, les polyéthylènes homopolymères basse densité ou les copolymères d'éthylène et d'alphaoléfine linéaire haute densité, linéaire basse densité ou linéaire très basse densité, les copolymères éthylène-acétate de vinyle, éthylène-acrylate de méthyle, éthylène-acrylate d'éthyle, éthylène-acide acrylique et les ionomères, les polypropylènes homopolymères, les polypropylènes métallocènes, les copolymères propylène-éthylène, propylène-alphaoléfine. Cette matrice de polymère thermoplastique présente des propriétés élastiques et mécaniques compatibles avec l'utilisation ultérieure envisagée.

Le film microporeux comprend, en outre, une charge inorganique et/ou organique, avantageusement inorganique, choisie parmi le carbonate de calcium, le talc, une argile, le kaolin, la silice, la terre de diatomées, le carbonate de magnésium, le carbonate de baryum, le sulfate de magnésium, le sulfate de baryum, le sulfate de calcium, l'hydroxyde d'aluminium, l'hydroxyde de magnésium, l'oxyde de calcium, l'oxyde de magnésium, l'oxyde de zinc, l'oxyde de titane, l'alumine, le mica, la poudre de verre, une zéolite, seule ou en mélange, le carbonate de calcium étant particulièrement préféré.

La dimension des particules de la charge minérale et/ou organique est généralement inférieure à 40 µm et préférentiellement comprise entre 0,5 et 10 µm. Le film microporeux contient de préférence, de 20 à 65 % en poids, de carbonate de calcium, afin notamment d'obtenir la porosité désirée.

Il peut être également intéressant d'introduire dans la matrice polyoléfinique, simultanément à la charge minérale et/ou organique, un agent dispersant en faible quantité, afin de favoriser la dispersion de la charge au sein de la matrice ou bien d'autres agents actifs, tels que des lubrifiants, des pigments, des colorants, des stabilisants thermiques, des stabilisants photochimiques, des ignifugeants, des plastifiants, des antistatiques, des agents anti-oxydants, des agents antibactéricides ou antiaccaricides ou des agents biocides.

Ledit film peut être par préparation d'un mélange contenant la matrice polyoléfinique, les charges minérales et/ou organiques choisies et les éventuels additifs, puis extrusion d'une nappe par coulée à chaud dudit mélange à travers une filière plate, ou bien selon une méthode soufflée. La nappe est ensuite soumise à un ou plusieurs étirages tangentiels, effectués par exemple par traction au moyen d'un couple de rouleaux, selon les techniques classiques bien connues de l'homme du métier. Cet étirage peut être mono ou bi-directionnel, dans ce cas la nappe est soumise à un étirage dans une direction longitudinale et à un autre étirage dans une direction transversale.

Lors de sa préparation, le film peut également subir une opération de gaufrage afin d'obtenir un toucher se rapprochant des matériaux textiles.

Le choix de la matrice oléfinique, ainsi que celui de la charge, et en particulier du diamètre moyen de ses grains, la qualité de la dispersion de la charge au sein de la matrice polyolifénique et le choix du taux d'étirage appliqué à la nappe pour la formation du film, sont des facteurs qui favorisent l'obtention de la microporosité du film lui conférant sa perméabilité au gaz et à la vapeur d'eau.

La nappe est de préférence soumise à une étiration de 10 à 200 %, plus préférentiellement de 100 à 200 % . Pour avoir une respirabilité homogène, la charge sera avantageusement répartie de façon régulière à l'intérieur du film. Le film microporeux présente de préférence une densité surfacique comprise entre 15 et 60 g/m², préférentiellement 12 et 25 g/m², 20 g/m² étant particulièrement préféré. Le film microporeux présente de préférence une épaisseur comprise entre 10 et 80 µm, préférentiellement entre 15 et 65 µm.

Le film microporeux présente une respirabilité au gaz. En particulier, le film microporeux présente une perméabilité à la vapeur d'eau à 38°C, avec un taux d'humidité de 90 %, selon la méthode ASTM E96, compris entre 300 et 8000 g/m²/24 heures, de préférence 2000 à 8000 g/m²/24 heures. La norme ASTM E96 utilisée pour la mesure du taux de perméabilité à la vapeur d'eau (WVTR) a été publiée par l'ASTM (« AMERICAN SOCIETY FOR TESTING AND MATERIALS ») sous la référence E96. Les mesures sont effectuées avec un appareil automatique contrôlé par microprocesseur vendu par la société LYSSY sous la référence L80/90-4000H.

Selon une des caractéristiques essentielles de l'invention, le film microporeux ci-dessus défini est associé sur une de ses faces, à un adhésif thermoplastique incluant des particules d'acide polyacrylique réticulé, au moins partiellement neutralisé sous forme de sel de métal alcalin, de préférence sous forme de sel de sodium, de diamètre moyen compris entre environ 1 et 65 µm, de préférence compris entre environ 20 et 40 µm.

Ces particules possèdent des propriétés de « super absorbant » et vont, de ce fait, absorber les liquides aqueux venant au contact de la surface du film et ainsi éviter que les liquides traversent ce dernier.

De façon avantageuse, l'adhésif thermoplastique au sens de l'invention, inclut de 5 à 40 % en poids de particules « super absorbantes », lesdites particules présentant de préférence, un diamètre moyen compris entre environ 1 et 65 µm, de préférence compris entre environ 20 et 40 µm.

L'adhésif thermoplastique comprend un polymère thermoplastique choisi avantageusement parmi les polyoléfines, homopolymères ou copolymères, en particulier parmi le polypropylène, les vestoplasts, les copolymères éthylène-vinyle acétate. L'adhésif thermoplastique comprend de préférence de 2 à 40 % d'un polymère thermoplastique précité, 2 à 20 % en poids de polyisobutylène, 5 à 40 % en poids d'une résine collante telle qu'une résine en C₅ hydrogénée ou une résine aromatique cyclique ou linéaire, éventuellement 2 à 20 % en poids d'une cire microcristalline présentant un point de fusion compris entre 65 et 85°C et 4 à 40 % en poids de particules d'acide polyacrylique réticulé, au moins partiellement neutralisé sous forme de sel de sodium, de diamètre moyen compris entre environ 20 et 40 µm.

En tant que résine collante, on pourra utiliser des résines hydrogénées du type C₅, telles que celles vendues par la société EXXON CHEMICALS, sous la dénomination Escorez de la série 5000, en particulier les Escorez E 5380, E 5600, ou bien des résines aromatiques ou cycliques aliphatiques telle que l'Escorez E 2184 ou leurs équivalents.

L'adhésif thermoplastique est appliqué sur l'une des faces du film microporeux selon toute méthode appropriée, par exemple, à l'aide d'une buse de colle. La température d'application est choisie de sorte que l'adhésif se trouve à l'état ramolli ou de fusion. Après application, le retour à température ambiante entraîne son durcissement. L'adhésif thermoplastique peut recouvrir totalement la surface du film microporeux rendant le film imperméable aux liquides aqueux et ce sur toute sa surface. Il peut également être envisagé que l'adhésif recouvre partiellement la surface du film, en étant appliqué par exemple, par pulvérisations ou sous la forme de traits multiples.

Les particules d'acide polyacrylique réticulé, au moins partiellement neutralisé sous forme de sel de sodium utilisées présentent des propriétés avantageuses, étant donné qu'en l'absence de liquide aqueux, ces particules ne s'expansent pas à l'intérieur de l'adhésif thermoplastique. Mais, lorsque l'adhésif est mis en contact avec un liquide aqueux, leur réactivation est immédiate. De plus, la présence d'adhésif n'affecte pas ou faiblement la perméabilité du film microporeux. En effet, le complexe selon l'invention présente en général une perméabilité à la vapeur d'eau à 38°C, avec un taux d'humidité de 90 %, selon la méthode ASTM E96, compris entre 300 et 8000 g/m²/24 heures, de préférence 2000 à 8000 g/m²/24 heures.

L'adhésif thermoplastique est appliqué sur la face du film microporeux, à raison de 1 à 15 g/m². Lorsque l'adhésif thermoplastique est présent en faible quantité, par exemple de 1 à 5 g/m², il est réparti de façon uniforme, alors que lorsqu'il est présent à raison de 5 à 15 g/m², il peut être réparti de façon aléatoire.

La présente invention a également pour objet un produit composite comportant un complexe selon l'invention associé sur sa face portant l'adhésif thermoplastique à un matelas absorbant fibreux, un tissu ou un non-tissé, éventuellement recouvert d'un voile de protection. L'adhésif assure la liaison entre le fim micro poreux et le matelas, tissu ou non-tissé à fonction absorbante.

Selon un autre aspect, l'invention concerne un produit composite comportant un complexe ci-dessus défini, associé sur sa face portant l'adhésif thermoplastique à un film plastique, par exemple en polyéthylène, perforé.

Les propriétés du complexe et du produit composite selon l'invention, sont particulièrement adaptées pour son utilisation dans la fabrication d'articles d'hygiène absorbants jetables, telles que les couches-culottes, les serviettes hygiéniques, les protège-seins, les produits absorbants pour l'incontinence. Le complexe et le produit composite, selon l'invention, peuvent également être utilisés pour la fabrication de produits chirurgicaux, de pansements ou d'alèses. Le complexe selon l'invention peut également être utilisé dans le domaine de l'alimentaire, notamment pour la fabrication de complexes absorbants pour barquettes destinées aux produits alimentaires comme la viande, le poisson.

En effet, le complexe selon l'invention, est parfaitement adapté à ce type d'application car il présente une haute respirabilité tout en permettant une sécurité améliorée, en assurant l'absorption des liquides aqueux venant au contact de la face recouverte d'adhésif thermoplastique, lors de la pression éventuelle de l'article absorbant. De plus, le complexe selon l'invention, de par la nature de l'adhésif thermoplastique mis en oeuvre, peut aisément être stérilisé, notamment en étant soumis à un traitement aux rayons gamma.

L'invention a donc également pour objet des articles, en particulier des articles d'hygiène jetables, comportant un complexe selon l'invention, associé sur sa face portant l'adhésif thermoplastique, à un matelas absorbant. L'adhésif thermoplastique permet d'assurer la liaison entre le film microporeux et le matelas absorbant, le film microporeux servant de support à ce dernier. En particulier, les articles d'hygiène selon l'invention, associent un complexe ci-dessus défini à un tissu, en coton par exemple, ou à un non-tissé à base de fibres cellulosiques ou de fibres de carbone. Les articles d'hygiène jetables combinant le complexe selon l'invention, à un non tissé à base de fibres de carbone permettent d'obtenir des articles absorbants particulièrement utiles dans le cas de présence d'escarts. Le non tissé est appliqué sur la peau, le film microporeux servant de support et permettant son positionnement et sa fermeture sur la peau de l'utilisateur.

Les exemples ci-après permettent d'illustrer l'invention mais n'ont nullement un caractère limitatif.

### Exemple 1

### a) préparation de l'adhésif thermoplastique

Dans un malaxeur chauffé à 120-160°, on introduit les composants suivants : 39,7 % de polymère polyalphaoléfine d'une masse moléculaire de 13 800 à 118 000 g/mol et d'un point de ramollissement de 108°+/- 4° tel que le Vestoplast 792 de Hüls Creanova, 15 % de polyisobutylène du type Napvis D 150 DE BP Chemicals, 10 % d'une cire microcristalline d'un point de fusion de 78°C et de 15 % d'une résine collante C₅ d'Exxon Chemicals hydrogénée du type Escorez E 5380, d'un antioxydant du type Irganox 1076 et de 20 % d'acide polyacrylique réticulé, au moins partiellement neutralisé sous forme de sel de sodium en poudre fine de diamètre moyen d'environ 30 microns.

Le mélange est porté à 140/160°C jusqu'à la répartition homogène de la masse en fusion.

### b) l'adhésif thermoplastique est appliqué uniformément à raison de 1,5 à 2 g/m² sur un film de polyéthylène linéaire basse densité de masse surfacique 20 g/m² commercialisé par la société RKW FILM DIVISION sous la référence MBBS.

### Exemple 2

### a) préparation de l'adhésif thermoplastique

On procède de la même manière que dans l'exemple 1 en utilisant 12 % d'un copolymère de polyalphaoléfine d'une masse moléculaire de 18 000 à 88 000 g/mol et d'un point de ramollissement de 99°C +/- 4 tel que le Vestoplast 751 de Hüls Creanova et de 28 % d'un copolymère polyalphaoléfine d'une masse moléculaire de 18 000 à 52 000 g/mol riche en butène, d'un point de ramollissement de 84°C +/- 4 tel que le Vestoplast 508 de Hüls Creanova, de 8 % d'un polyisobutylène du type Napvis D 150 de BP Chemicals, de 31,7 % d'une résine tackifiante C₅ hydrogénée telle que l'Escorez E 5380, de 20 % d'acide polyacrylique réticulé, partiellement neutralisé sous forme de sel de sodium, en poudre fine de diamètre d'environ 30 microns et de 0,3 % d'Irganox 1076.

### b) l'adhésif thermoplastique est appliqué uniformément à raison de 1,5 à 2 g/m² sur un film de polyéthylène linéaire basse densité de masse surfacique 20 g/m² commercialisé par la société RKW FILM DIVISION sous la référence MBBS.

Ce complexe peut être associé, par exemple par thermocompressage, à un non tissé à base de fibres synthétiques de 15g/ m².

On obtient pour le complexe de l'exemple 2 un WVTR de 2087 g/m²/24 heures à 38°C avec un taux d'humidité de 90 % mesuré selon la méthode ASTM E96 avec un appareillage LYSSY. En l'absence d'adhésif, le WVTR obtenu est égal à 2689 g/m²/24 heures, alors qu'en présence d'un adhésif thermoplastique standard, le WVTR obtenu est égal à 1957 g/m²/24 heures. Il apparaît donc que le complexe selon l'invention permet d'obtenir une respirabilité améliorée par rapport à l'utilisation d'autres absorbants.

Par ailleurs, le complexe, selon l'invention, permet d'obtenir une sécurité accrue, toute fuite étant évitée. Le complexe selon l'invention, permet de maintenir une colonne d'eau très élevée sans qu'il y ait de fuite.

## Revendications

1. Complexe à la fois perméable au gaz et imperméable, au moins pour partie, aux liquides aqueux comprenant un film microporeux à base d'un polymère imperméable aux liquides aqueux, ledit film comportant sur l'une de ses faces, un adhésif thermoplastique incluant des particules d'acide polyacrylique réticulé, au moins partiellement neutralisé sous forme de sels de métal alcalin, de préférence sous forme de sel de sodium, de diamètre moyen compris entre 1 et 65 µm.

2. Complexe selon la revendication 1, **caractérisé en ce qu'**il présente une perméabilité à la vapeur d'eau à 38°C, avec un taux d'humidité de 90 %, selon la méthode ASTM E96, compris entre 300 et 8000 g/m²/24 heures, de préférence 2000 à 8000 g/m²/24 heures.

3. Complexe selon la revendication 1 ou 2, **caractérisé en ce que** l'adhésif thermoplastique inclut de 5 à 40 % en poids de particules d'acide polyacrylique réticulé, au moins partiellement neutralisé sous forme de sel de métal alcalin, de préférence sous forme de sel de sodium, de diamètre moyen compris entre 1 et 65 µm.

4. Complexe selon l'une des revendications 1 à 3, **caractérisé en ce qu'**il comporte de 1 à 15 g/m² d'adhésif thermoplastique.

5. Complexe selon l'une des revendications 1 à 4, **caractérisé en ce que** l'adhésif thermoplastique comprend un polymère thermoplastique choisi parmi les polyoléfines homopolymères ou copolymères.

6. Complexe selon la revendication 5, **caractérisé en ce que** l'adhésif thermoplastique comprend de 2 à 40 % en poids d'un polymère thermoplastique choisi parmi le polypropylène, les copolymère de polyalphaoléfines, les copolymères d'éthylène-vinylacétate, 2 à 20 % en poids de polyisobutylène, 5 à 40 % en poids d'une résine collante telle qu'une résine en C₅ hydrogénée ou une résine aromatique cyclique ou linéaire, éventuellement 2 à 20 % en poids d'une cire microcristalline présentant un point de fusion compris entre 65 et 85°C et 5 à 40 % en poids de particules d'acide polyacrylique réticulé, au moins partiellement neutralisé sous forme de sel de métal alcalin, de préférence sous forme de sel de sodium, de diamètre moyen compris entre 1 et 65µm.

7. Complexe selon l'une des revendications 1 à 6, **caractérisé en ce que** le film microporeux est à base d'un mélange d'au moins un polymère polyoléfinique imperméable aux liquides aqueux et d'au moins une charge minérale et/ou organique.

8. Complexe selon la revendication 7, **caractérisé en ce que** le polymère polyoléfinique est choisi parmi le polyéthylène ou le polypropylène.

9. Complexe selon la revendication 8, **caractérisé en ce que** le film microporeux est à base de polyéthylène comprenant de 20 à 65 % de carbonate de calcium

10. Complexe selon l'une des revendications 1 à 9, **caractérisé en ce que** l'adhésif thermoplastique est stérilisé, par exemple, après traitement par rayonnements gamma.

11. Produit composite comportant un complexe selon l'une des revendications 1 à 10 associé sur sa face portant l'adhésif thermoplastique à un matelas absorbant fibreux, un tissu ou un non-tissé, éventuellement recouvert d'un voile de protection.

12. Produit composite comportant un complexe selon l'une des revendications 1 à 10 associé sur sa face portant l'adhésif thermoplastique à un film plastique, par exemple en polyéthylène, perforé.

13. Utilisation d'un complexe selon l'une des revendications 1 à 10 ou d'un complexe selon la revendication 11, pour la fabrication d'articles d'hygiène absorbants jetables tels que les couches-culottes, les serviettes hygiéniques, les protège-seins, les produits absorbants pour l'incontinence.

14. Utilisation d'un complexe selon l'une des revendications 1 à 10 ou d'un complexe selon la revendication 11, pour la fabrication de produits chirurgicaux, de pansements ou d'alèses.

15. Utilisation d'un complexe selon l'une des revendications 1 à 10, pour la fabrication de complexe absorbant pour barquettes destinées aux produits alimentaires comme la viande, le poisson.

16. Articles d'hygiène jetables comportant un complexe selon l'une des revendications 1 à 10, associé sur sa face portant l'adhésif thermoplastique, à un matelas absorbant.

17. Articles d'hygiène jetables, comportant un complexe selon l'une des revendications 1 à 10, associé sur sa face portant l'adhésif thermoplastique à un non-tissé à base de fibres cellulosiques.

18. Articles d'hygiène jetables, comportant un complexe selon l'une des revendications 1 à 10, associé sur sa face portant l'adhésif thermoplastique à un non-tissé à base de fibres de carbone.
